(19) **Europäisches Patentamt**

**European Patent Office**

**Office européen des brevets**

(11) **EP 1 035 544 B1**

(12) **EUROPEAN PATENT SPECIFICATION**

(45) Date of publication and mention
of the grant of the patent:
**23.04.2003 Bulletin 2003/17**

(51) Int Cl.⁷: **G11B 20/10**, G11B 20/18

(21) Application number: **00301362.0**

(22) Date of filing: **22.02.2000**

(54) **Optical disk apparatus and method for access to optical disk**

Abspielgerät für optische Platten und Verfahren zur Zugriffssteuerung

Lecteur de disque optique et méthode pour la commande d'accès

(84) Designated Contracting States:
**DE FR GB**

(30) Priority: **01.03.1999 JP 5208499**

(43) Date of publication of application:
**13.09.2000 Bulletin 2000/37**

(73) Proprietor: **SONY CORPORATION**
**Tokyo 141 (JP)**

(72) Inventors:
• **Matsumoto, Yoshinori**
**Shinagawa-ku, Tokyo (JP)**
• **Senshu, Susumu**
**Shinagawa-ku, Tokyo (JP)**
• **Katsuramoto, Shinji**
**Shinagawa-ku, Tokyo (JP)**

(74) Representative:
**Robinson, Nigel Alexander Julian et al**
**D. Young & Co.,**
**21 New Fetter Lane**
**London EC4A 1DA (GB)**

(56) References cited:
**EP-A- 0 428 208         EP-A- 0 798 710**

**Description**

The present invention relates to an optical disk apparatus and a method for accessing an optical disk therein, and it is applicable to an optical disk apparatus to record video data for example.

In any conventional optical disk apparatus known heretofore, it has been customary heretofore to record desired data in units of sectors, wherein the data are re-recorded by the use of alternate sectors to ensure high reliability.

More specifically, in an optical disk apparatus, an optical disk is accessed with irradiation of a laser beam having a diameter of normally less than 1 μm, so that there may occur a case where the laser beam is intercepted by some slight defects on an information recording plane of the disk, or by some dirt or dust on the disk surface. In such a case, it becomes difficult to properly record and/or reproduce the data.

For this reason, in the optical disk apparatus, an error correcting code is attached additionally to the data being recorded, and an error correction is executed with regard to the result of reproduction in accordance with such error correcting code, or a retry is repeated when necessary to thereby achieve proper reproduction of the desired data.

Further in the optical disk apparatus, any error is detected, in a recording mode, through a read-after-write process and, with regard to any sector detected to include any error, the data of such error-detected sector are re-recorded in an alternate sector.

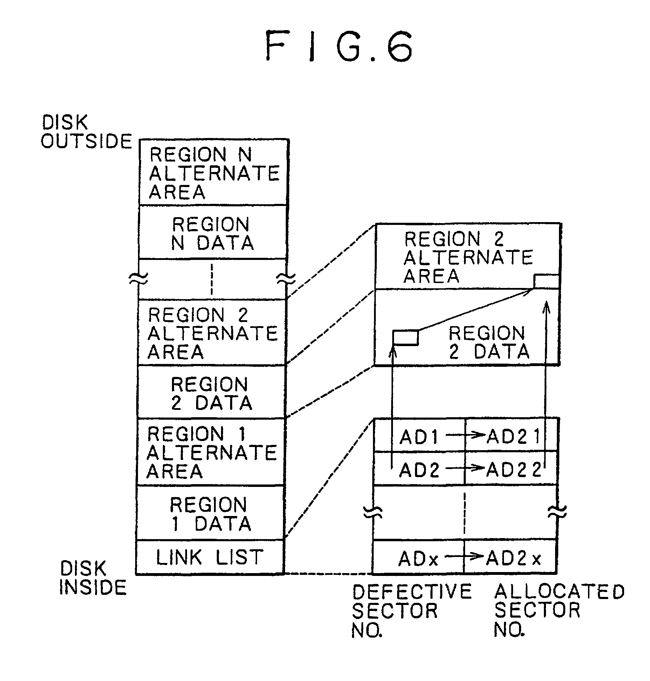

Fig. 6 of the accompanying drawings is a schematic diagram showing the composition of recording regions on an optical disk of the type mentioned above. On this optical disk, there is formed, in its innermost periphery, a recording region for a link list which indicates the correspondence between alternate sectors and defective sectors. Further on the optical disk, the remaining recording region is divided into concentric portions, and each portion is further divided into a data recording area and an alternate area. The optical disk consists of such unit sectors each composed of a data recording area and an alternate area thus formed. And sector addresses, which are physical addresses, are allocated respectively to the sectors of data recording areas and alternate areas in sequence from the inner periphery for example.

In response to an access command inputted from an external device to the disk apparatus correspondingly to a logical address, the data recording area of the relevant physical address is accessed correspondingly to the logical address. In case the access command inputted from the external device is a write command for example, the user data received from the external device are recorded sequentially in the data recording area determined by the relevant physical address, and the recorded data are immediately reproduced through a read-after-write process for detection of any error. And upon detection of any error in the reproduced data, the sector including such a detected error is set as a defective sector, and the address thereof is registered on a link list. Further the data to be recorded in this defective sector are recorded in the empty region of the alternate area, and the address of this alternate sector is registered on the link list. Registration on the link list is executed collectively after completion of a series of recording processes for example.

In a reproduction mode, when an access command relative to a logical address is inputted from the external device to the optical disk apparatus, the corresponding physical address is detected in accordance with such logical address, and the address of the relevant defective sector is detected from the link list. Subsequently the sectors relative to the physical address are accessed in sequence and, after completion of reproduction up to the defective sector, the data of the alternate sector are reproduced, and then the data of the succeeding data recording region are reproduced.

Thus, in the optical disk apparatus, the optical disk can be accessed while enabling the external device to be unaware of the alternate sector, hence realizing satisfactory recording and reproduction of desired data with high reliability.

When recording the data of any defective sector in an alternate sector in the manner mentioned above, it is necessary, in the optical disk apparatus, to seek an optical pickup between the defective sector and the alternate sector. In this case, for the purpose of recording successive data in real time without any interruption, it is necessary to record such data on the optical disk at a rate far higher than the data transfer rate between the disk apparatus and the external device, and also to prepare a buffer memory of a sufficiently great capacity with regard to the time required for the seek.

In the case of recording any data of a relatively low transfer rate, such as audio signal or the like, the optical disk apparatus can be constituted in a simple structure as a whole. However, in real-time recording of some other data of a relatively high transfer rate, such as video data for example, there arises a problem that the whole structure is complicated.

It is therefore an object of at least preferred embodiments of the present invention to provide, in view of the points described above, an improved optical disk apparatus which is structurally simple and is capable of realizing real-time recording of high transfer rate data such as video data with accuracy and certainty.

European Patent Application Publication No. EP-A-0 428 208 discloses an optical disk apparatus according to the pre-characterising part of claim 1 hereof.

According to one aspect of the invention there is provided an optical disk apparatus for sequentially recording desired data per unit of a predetermined data quantity in response to an input command, comprising:

an input means for inputting the command and the data;

a recording means for recording the data on an optical disk; and

a control means for controlling the operation of said input means and said recording means in response to the command and for executing a slipping process within a range of a data quantity permissible for slipping;

characterised in that said data quantity is accepted by the control means and the range of the data quantity is the data quantity that can be buffered during the slipping process.

Preferably, control means executes the slipping process on the basis of the result of monitoring a tracking error signal or a focus error signal.

According to another aspect of the present invention there is provided a method for access to an optical disk where desired data are recorded sequentially per unit of a predetermined data quantity in response to an issued command by an optical disk apparatus, said method comprising enabling said optical disk apparatus to execute a slipping process within a range of a data quantity permissible for slipping, characterised by notifying said optical disk apparatus of the data quantity permissible for slipping, the range of the data quantity being the data quantity that can be buffered during the slipping process, and enabling the apparatus to execute the slipping process only within said range.

In recording AV data or the like in units of logical sectors, a preferred embodiment of the present invention described hereinbelow notifies a data quantity permissible for slipping, and then executes the slipping process within a range of such a data quantity to thereby perform, in a simplified structure, exact real-time recording of high transfer rate data such as video data.

In the optical disk apparatus of the preferred embodiment, it becomes possible, due to the slipping process, to reduce the waiting time in comparison with the known case of using alternate sectors, and the structure simplified correspondingly thereto is effective in real-time recording of high transfer rate data. In the recording mode, a data quantity permissible for slipping is accepted, and the slipping process is executed within a range of the data quantity, so that the required data transfer rate is controlled on the host side without losing the data already recorded, and the slipping can be executed within a processible range to thereby perform exact recording of the desired data with certainty.

And in the method for access to an optical disk, the optical disk apparatus is notified of a data quantity permissible for slipping, and the disk apparatus executes the slipping process within a range of such data quantity. Therefore, in this case also, real-time recording of the high transfer rate data can be performed in the simplified structure without losing the data already recorded.

Embodiments of the invention will now be described, by way of example only, with reference to the accompanying drawings in which:

Fig. 1 is a flowchart showing a processing routine of a drive controller in an optical disk system represented by an example embodiment of the present invention;

Fig. 2 is a block diagram of an optical disk system where the drive controller in Fig. 1 is applied;

Fig. 3 is a schematic diagram for explaining data attached additionally to a control command;

Fig. 4 is a flowchart continued from Fig. 1;

Figs. 5A and 5B are schematic diagrams for explaining how slipping is executed in the processing routine of Fig. 1; and

Fig. 6 is a schematic diagram for explaining how alternate sectors are processed.

(1) Structure of Embodiment

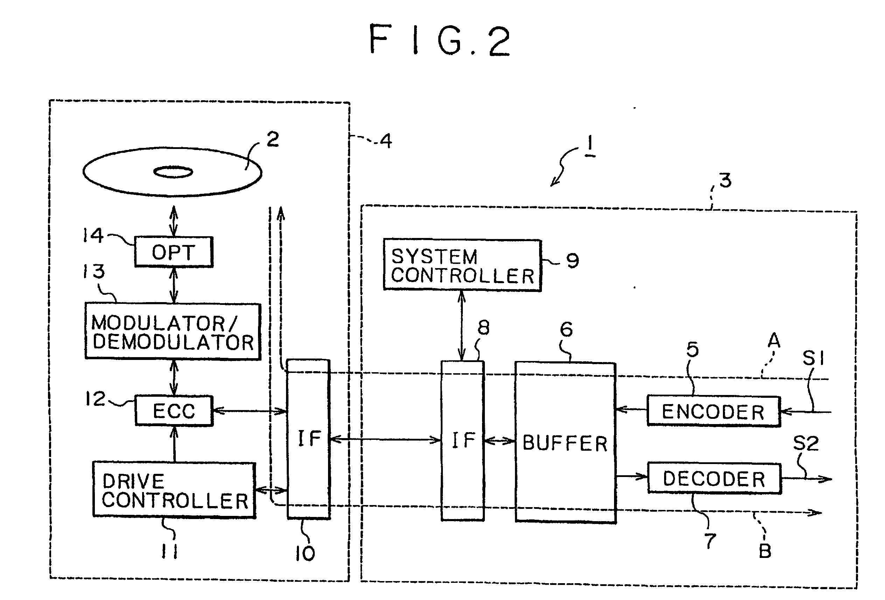

Fig. 2 is a block diagram of an optical disk system represented by a preferred embodiment of the present invention. This optical disk system 1 records, on an optical disk 2, video data and audio data (hereinafter referred to as AV data) S1 outputted from a video device such as a disk satellite broadcast receiver for example, or reproduces AV data S2 recorded on the optical disk 2, and then sends the reproduced data to the video device.

In the optical disk system 1, a system section 3 receives a manipulation of a user and inputs the AV data S1 from or outputs the AV data S2 to the video device. And in response to the user's manipulation, the system section 3 issues a control command to a drive section 4 and, after processing the AV data S1 and S2, inputs or outputs the processed data from or to the drive section 4. Then, in response to the control command sent from the system section 3, the drive section 4 stores the output data from the system section 3 onto the optical disk 2, or reproduces the AV data recorded on the optical disk 2 and then outputs the same.

For this purpose, an encoder 5 in the system section 3 compresses the input AV data obtained from the video device and then outputs the compressed data to a buffer 6. In the encoder 5, such compression of the AV data is performed in conformity with the MPEG (Moving Picture Experts Group) standard. Meanwhile in a reproduction mode, a decoder 7 expands the compressed AV data obtained from the buffer 6 and then outputs the same to the video device.

In a recording mode, the buffer 6 temporarily holds the AV data outputted from the encoder 5 and sends the same to an interface (IF) 8. And in a reproduction mode, the buffer 6 temporarily holds the AV data inputted from the interface 8 and sends the same to the decoder 7.

The interface 8 constitutes an input/output circuit in combination with the drive section 4, and outputs a control command, which is issued from a system controller 9 under control thereof, to the drive section 4, and also outputs status data or the like obtained from the drive section 4, to the system controller 9. In the recording mode, the interface 8 sends the output AV data of the buffer 6 to the drive section 4. Meanwhile in the reproduction mode, the interface 8 sends the output AV data of the drive section 4 to the buffer 6. In any of such processes, the interface 8 inputs or outputs the AV data per predetermined unit thereof constituting a logical sector and, in the recording mode, controls the operation of the buffer 6 in response to a resend request from the drive section 4, thereby resending the corresponding AV data.

The system controller 9 consists of a microcomputer to control the operation of the optical disk system 1, and switches the operation of the system section 3 in response to a manipulation of an unshown member or the like while issuing a control command to the drive section 4. At a start of the operation or upon loading of an optical disk 2, the system controller 9 acquires file allocation data from the drive section 4 and then detects the file name of the AV data recorded on the optical disk 2 and also the logical address of an empty region. In case the issued control command instructs recording or reproduction of the AV data, the system controller 9 instructs reproduction of the desired file indicated by the user, on the basis of the file allocation data thus obtained, and further instructs recording of the AV data in the empty region and deletion of any unrequired file or the like.

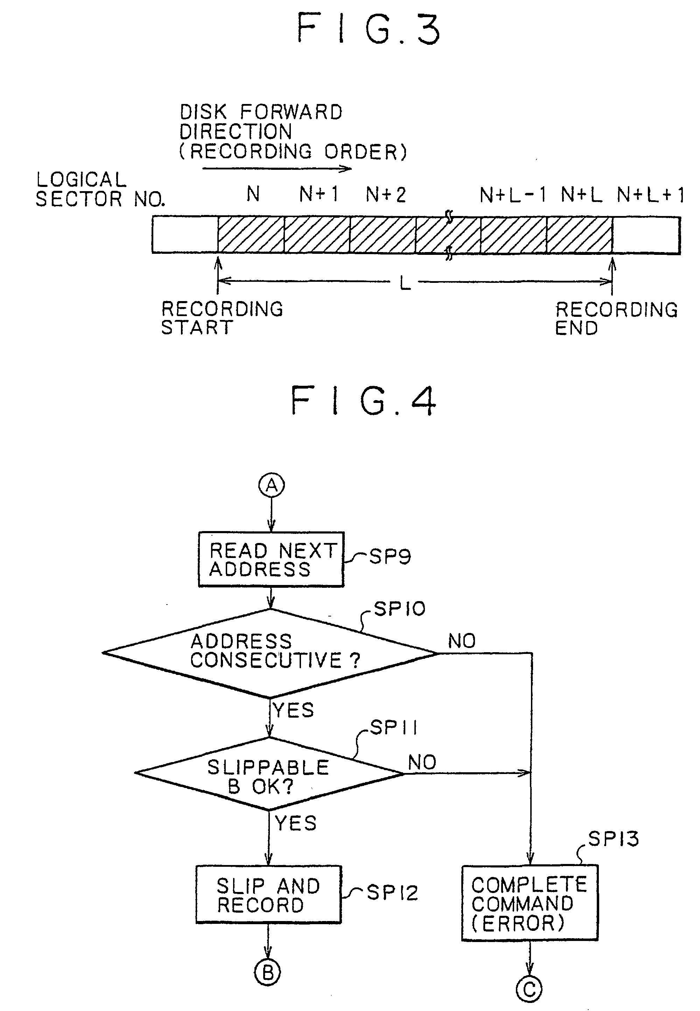

At the time to instruct recording of the AV data, the system controller 9 attaches a top logical sector No. N and a data length L (or a last logical sector No.) to the output control command, as in the case of instructing a normal optical disk drive to record the data. As shown in Fig. 3, the top logical sector No. N signifies address data that represents a logical address to specify the top sector at the beginning of recording, and the last logical sector No. signifies address data that represents the logical address to specify the last sector at the end of recording. The data length L is specified by the number of logical sectors used for the recording.

Further in this embodiment, the system controller 9 notifies the drive section 4 of these data and, in addition thereto, the number B of sectors permissible for slipping (hereinafter referred to as number of slippable sectors).

Here the system controller 9 calculates the number b of bits to permit slipping that satisfies the following relation for not causing overflow of the buffer 6 due to execution of a predetermined computation, and further calculates the number B of slippable sectors through division of the number b of bits by the number of bits per sector.

[Expression 1]

$$\left( \frac{a}{a+b} \bullet \frac{D}{V} - 1 \right) \times a > (K - K1) \qquad \ldots \ldots \quad (1)$$

In the above expression, a denotes the number of entire bits (Mbits) to be recorded according to an issued command; D denotes an actual transfer rate (Mbits/sec) to the optical disk 2 with the seek time and so forth excluded; V denotes a transfer rate (Mbits/sec) of the AV data S1 inputted from the video device; K denotes the empty capacity (Mbits) of the buffer 6 prior to issue of the command; and K1 denotes the empty capacity (Mbits) of the buffer 6 to be left after processing the command.

In this manner, the system controller 9 calculates the number of slippable sectors so as not to cause overflow of the buffer 6 despite the real-time slipping process executed in the drive section 4, and then notifies the drive section 4 of the calculated number.

In the drive section 4, an interface (IF) 10 constitutes an input/output circuit in combination with the system section 3, and notifies a drive controller 11 of a control command issued from the system section 3, and also outputs status data or the like obtained from the drive controller 11. when the optical disk 2 is loaded for example, the interface 10 acquires, from the drive controller 11, file allocation data recorded in the innermost portion of the optical disk 2 and then notifies the system section 3 of such data, thereby enabling the system section 3 to instruct access to the optical disk 2.

Further in the recording mode, the interface 10 sends the output AV data from the system section 3 to an ECC (Error Correcting Code) circuit 12. Meanwhile in the reproduction mode, the interface 10 sends the output AV data from the ECC circuit 12 to the system section 3.

In the recording mode, the ECC circuit 12 generates an error correcting code and attaches the same additionally to the AV data inputted from the interface 10, and then sends both the AV data and the error correcting code to a modulator/demodulator 13. In this case, the ECC circuit 12 generates such an error correcting code per predetermined data unit corresponding to each sector of the optical disk 2, and outputs the data after interleaving the same. Meanwhile in the reproduction mode, the ECC circuit 12 deinterleaves the reproduced data obtained from the modulator/demodulator 13. Further the ECC circuit 12 executes error correction of the AV data, which constitute the reproduced data, by the error correcting code attached additionally to the AV data, and then outputs the error-corrected AV data to the interface 10.

Upon loading of the optical disk 2 under control of the drive controller 11, the ECC circuit 12 processes management data, which are detected from the innermost portion of the optical disk 2, in the same manner as the AV data to thereby acquire file allocation data and so forth, and then notifies the drive controller 11 of such data. And when the AV data relative to one file have been completely recorded, the ECC circuit 12 processes, under control of the drive controller 11, the file allocation data and so forth used for updating the management data, in the same manner as in the AV data recording mode, and then outputs the processed data to the modulator/demodulator 13.

Subsequently, the modulator/demodulator 13 modulates the output data of the ECC circuit 12 in the recording mode, and sends such data after attaching thereto a sync pattern, address data and so forth. Meanwhile in the reproduction mode, the modulator/demodulator 13 reproduces a clock out of the reproduced signal obtained from an optical pickup (OPT) 14, and detects the reproduced data by binarily identifying the reproduced signal with reference to the clock. Further the modulator/demodulator 13 demodulates the reproduced data and then sends the demodulated data to the ECC circuit 12.

The optical pickup 14 irradiates a laser beam onto the optical disk 2, then receives the return light therefrom and processes the result of such received light, thereby generating a tracking error signal whose level changes in accordance with a tracking error, a focus error signal whose level changes in accordance with a focus error, and a reproduced signal whose level changes in accordance with each of pit trains and mark trains formed on the optical disk 2. Under control of unshown servo circuits, the optical pickup 14 is controlled with respect to tracking and focus in compliance with the tracking error signal and the focus error signal respectively, and in the reproduction mode, sends the reproduced signal to the modulator/demodulator 13. Thus, in the optical disk system 1, the AV data S2 recorded on the optical disk 2 can be reproduced and outputted in the reproduction mode, as shown in Fig. 2 where symbol B denotes a flow of the AV data S2.

In the reproduction mode, the optical pickup 14 boots up the light amount of the laser beam intermittently in accordance with the output data of the modulator/demodulator 13 in a state where both the tracking control and the focus control are being executed, and then irradiates such laser beam to the optical disk 2, thereby enabling the optical disk system 1 to record, on the optical disk 2, the AV data S2 inputted from the video device, as shown in Fig. 3 where symbol A denotes a flow of the AV data S1.

The drive controller 11 consists of a microcomputer to control the operation of the drive section 4. When the optical disk 2 is loaded or the power supply is switched on, the drive controller 11 seeks the optical pickup 14 to the innermost portion of the optical disk 2, hence acquiring the management data recorded in the innermost portion. The drive controller 11 sets, on the basis of such management data, the light amount and so forth of the optical pickup 14 in the recording mode, and also acquires the file allocation data and notifies the system section 3 of such data.

Upon completion of recording the AV data relative to one file, the drive controller 11 seeks the optical pickup 14 to the innermost portion of the optical disk 2, then generates file allocation data and so forth corresponding thereto, and sends such data to the ECC circuit 12, hence updating the management data to realize an access to the desired file according to the recorded AV data.

In response to a recording/reproduction command from the system section 3, the drive controller 11 converts the logical sector No., which is attached additionally to the recording/reproduction command, into a physical sector No. of the optical disk 2, and then controls the entire operation for access to the optical disk 2 according to the physical sector No. In this recording process, the drive controller 11 detects a state where the data are hardly recordable properly. More concretely, in this embodiment, such a data hardly recordable state is detected from some tracking error and focus error obtained by monitoring the levels of the tracking error signal and the focus error signal.

Upon detection of such a data hardly recordable state, the drive controller 11 executes a slipping process to re-record the data, which are to be recorded in the logical sector where a data hardly recordable state has occurred, in a succeeding logical sector. In this case, the drive controller 11 executes the above process by issuing, if necessary, a resend request to the system section 3.

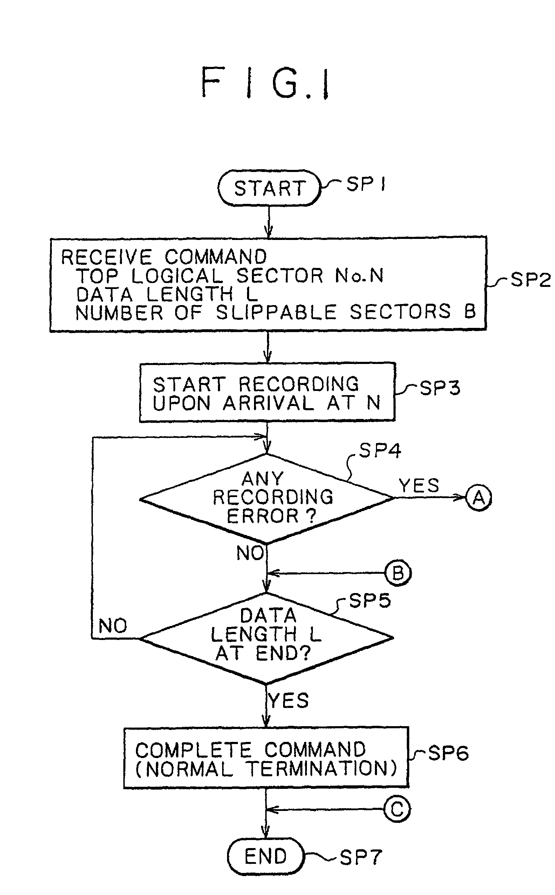

Figs. 1 and 4 are flowcharts each showing a processing routine executed by the drive controller 11 in the recording mode. Upon input of a write control command, the drive controller 11 proceeds from step SP1 to step SP2 to receive the control command, and then acquires a top logical sector No. N, a data length L, and the number B of slippable sectors.

Subsequently the drive controller 11 seeks the optical pickup 14, if necessary. And upon start of irradiation of a laser beam to a physical sector corresponding to the top logical sector No. N, the drive controller 11 starts recording the AV data inputted from the system section 3 to the optical disk 2.

Thereafter the drive controller 11 proceeds to step SP4 to make a decision as to whether any error has occurred or not. If a data hardly recordable state due to some tracking error or focus error is detected at this step, the drive controller 11 decides that an error has occurred. However, if such a data hardly recordable state is not detected, the drive controller 11 decides that no error has occurred, and then proceeds to step SP5.

At this step, the drive controller 11 sets the light amount of a laser beam, which is emitted from the optical pickup 14, to a predetermined value in the reproduction mode, thereby preventing damage of the data recorded in adjacent tracks. Further the drive controller 11 makes a decision as to whether the data have been recorded completely in the length L specified by the control command. And if the result of this decision is negative, the operation returns to step SP4. After start of recording the AV data from the recording start position specified by the system section 3, the drive controller 11 repeats the processes of steps SP4 - SP5 - SP4 to thereby record the AV data in the length L successively in units of logical sectors. And upon completion of recording the entire AV data in the length L, the operation proceeds from step SP6 to step SP7.

After the drive controller 11 sends to the system section 3 the status data signifying normal completion of the command, the operation proceeds to step SP7 to thereby terminate the processing routine. In this manner, the drive controller 11 records the AV data on the optical disk 2 from the recording start position specified by the system section 3.

In case a data hardly recordable state is detected, the operation proceeds from step SP4 to step SP9 (Fig. 4), where the drive controller 11 detects the address of a succeeding recordable logical sector next to the error-detected logical sector. Subsequently the drive controller 11 proceeds to step SP10 to make a decision as to whether the logical address detected at step SP9 is consecutive to the logical address of the latest recorded sector, thereby deciding if a slipping process is possible or not.

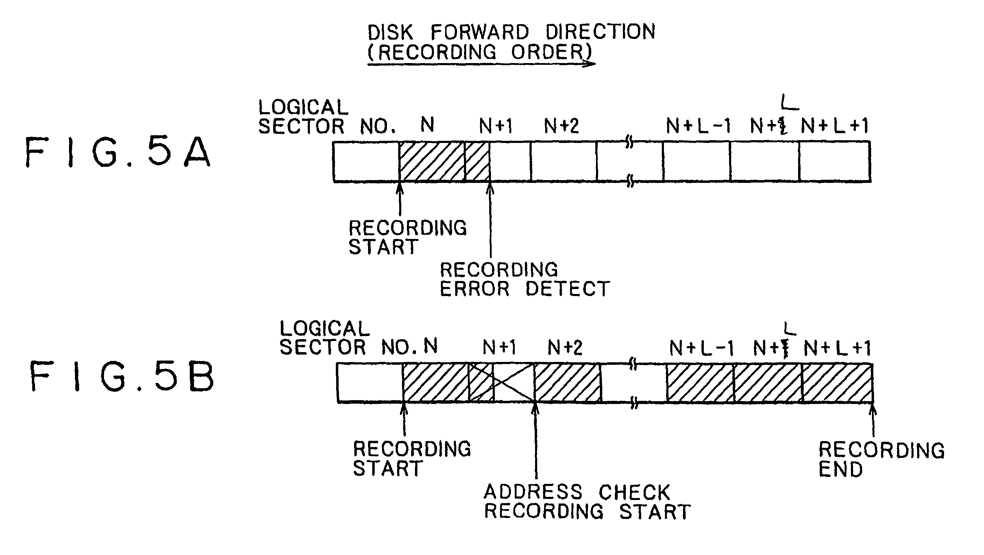

The slipping process is so executed that, if any error is detected, as shown in Fig. 5A, in a logical sector No. N+1 for example in the recording mode, then the optical pickup is sought to an alternate sector and, instead of recording the data of the error-detected logical sector in the alternate sector, the data subsequent to the error-detected logical sector are shifted and recorded, sector by sector, in the succeeding logical sectors as shown in Fig. 5B, hence recording the consecutive data in a shorter idle time in comparison with the known process using alternate sectors. Fig. 5B represents an exemplary case where AV data of L sectors are recorded with slipping of one sector.

Meanwhile, if the result of the decision at step SP10 is affirmative, the drive controller 11 proceeds to step SP11 to make a decision as to whether slipping is possible or not under the condition specified by the system section 3. That is, at this step, the drive controller 11 makes a decision as to whether the number of the slipped sectors is less than the number B of slippable sectors attached to the control command. And in case the result of this decision is affirmative, the operation proceeds to step SP12.

At step SP12, the drive controller 11 controls the modulator/demodulator 13, the ECC circuit 12 and so forth in such a manner as to re-record the data, which are to be recorded in the error-detected sector, in the succeeding logical sector detected at step SP9, and if necessary, issues a resend request to the system section 3. After execution of a slipping process for one sector, the drive controller 11 returns to step SP5.

Meanwhile, if the result of the decision obtained at step SP10 is negative or the result at step SP11 is negative, the drive controller 11 proceeds to step SP13 to notify the system section 3 of the error, and then proceeds to step SP7 to terminate the processing routine.

With regard to any sector where data recording has thus been ceased by slipping, the drive controller 11 stores such sector in a predetermined list and records its data on the optical disk 2 together with the file allocation data thereof. And in the reproduction mode, the drive controller 11 controls the entire operation in such a manner as to perform data reproduction while skipping the recording-ceased sector in accordance with the list, hence achieving continuous reproduction of the consecutive AV data.

(2) Operation of Embodiment

When the optical disk 2 is loaded in the drive section 4 of the optical disk system 1 (Fig. 2) having the structure mentioned above, the management data in the innermost portion are reproduced, and then the file allocation recorded on the optical disk 2 is sent to the system controller 9 in the system section 3 according to such management data.

In the optical disk system 1, upon input of an instruction from a user to indicate reproduction of the optical disk 2, a desired portion to be reproduced is indicated by a logical address in accordance with the file allocation data, and a reproduction control command is issued from the system controller 9. Then in the drive section 4, the optical disk 2 is accessed according to the control command and the logical address. Thereafter a reproduced signal is generated in the optical pickup 14 out of the return light obtained from the optical disk 2, and the reproduced data is detected in the modulator/demodulator 13 from the reproduced signal. Subsequently the reproduced data is decoded and processed through error correction in the ECC circuit 12 to thereby demodulate the AV data. The AV data thus obtained is then sent via the interfaces 10 and 8 to the decoder 7 to be expanded therein, and then the AV data is outputted to the external video device.

Meanwhile, upon input of another instruction from the user to indicate recording of the AV data, similarly a desired portion to be recorded is indicated by the logical address in accordance with the file allocation data, and a recording control command is issued from the system controller 9. At this time, in the optical disk system 1, a data length B to permit a slipping process is attached to the control command being issued. The AV data S1 inputted successively are compressed by the encoder 5 and then are outputted successively via the buffer 6 to the drive section 4.

In the drive section 4, the AV data inputted successively are recorded on the optical disk 2 in conformity with the specified recording portions (Figs. 1, 4 and 5). In this recording mode, if any tracking error or focus error is detected by monitoring the tracking error signal and the focus error signal, the operation of recording the AV data is brought to a halt immediately, thereby preventing damage of the recorded AV data in the optical disk system 1.

Further in the drive section 4, a decision is made as to whether the logical sector No. of the succeeding recordable sector is consecutive to the recording-ceased sector, hence deciding if slipping is possible or not on the optical disk 2. More specifically, when recording and erasure are performed repeatedly on the optical disk, it becomes necessary to record the consecutive data dividedly in discrete regions. Thus, in the optical disk system 1, a slipping process is executed within a slipping permissible range to thereby prevent damage of the recorded AV data.

Also in the drive section 4, a decision is made as to whether the slipping is not in excess of the slipping permissible data length B specified by the host-side system section 3. And if the result of this decision is affirmative, the recording-ceased logical sector is skipped, and a series of consecutive AV data, which begin with the AV data allocated to the recording-ceased logical sector, are recorded sequentially in the sectors of succeeding logical sector numbers.

Thus, in the optical disk system 1, the consecutive AV data can be recorded while being not interrupted without the necessity of assigning any unrequired great capacity to the buffer 6 or without the necessity of raising the operation speed of the recording unit. Consequently, the whole structure can be simplified correspondingly thereto to eventually achieve exact real-time recording of the high transfer rate data.

Suppose now that AV data of L sectors are recorded in a case where a logical sector expressed by AV data has a size of M (Kbytes), and the AV data obtained from the optical disk 2 are transferred at a rate of T (bps). When C sectors are slipped in this case, the effective transfer rate T' (bps) can be expressed as follows.

[Expression 2]

$$T' = T \times (L + C)/L \tag{2}$$

That is, the transfer rate T' is reduced in proportion to a surplus period of irradiation of a laser beam to the optical disk 2 equivalently to the number C of the slipped sectors, so that in the optical disk system 1, it is possible to prevent lowering of the data transfer rate remarkably in comparison with the known case where seek is required for alternate sectors. Consequently, the high transfer rate data can be recorded exactly in real time without the necessity of raising the operation speed of the recording unit or without the necessity of assigning any unrequired great capacity to the buffer 6.

In this manner, as the slipping permissible data length B is specified from the host side, it becomes possible, on the host side, to manage the transfer rate of the AV data inputted from or outputted to the drive section 4. More specifically, in the recording mode, when the buffer 6 has a sufficient margin in its capacity, the slipping permissible data length B is set to be longer so that, even if the loaded optical disk 2 is the one deteriorated in quality, successive AV data can still be recorded without any interruption. In case the buffer 6 has not a sufficient margin, the slipping permissible data length B is set to be shorter on the contrary, thereby preventing overflow of the buffer 6 to achieve uninterrupted recording of the successive AV data.

Thus, the lowest data transfer rate ensurable in the reproduction mode can be managed in the recording mode to eventually realize real-time recording of the successive high transfer rate data in a simplified structure. Further, the recorded AV data can be protected from damage due to the management on the host side.

Consequently, in the reproduction mode, the successive AV data can be reproduced properly while any recording-ceased sectors are skipped.

(3) Effects of Embodiment

According to the structure mentioned above, the data quantity permissible for slipping is notified when recording the AV data in units of logical sectors, and the slipping process is executed within the range of the permissible data quantity, whereby the high transfer rate data can be recorded in real time exactly.

(4) Other Embodiments

The preferred embodiment described above expresses an exemplary case where the data quantity permissible for slipping is calculated in accordance with the buffer capacity. However, it is to be understood that the present invention is not limited to such example alone, and a variety of methods may be widely adopted for calculation of the data quantity permissible for slipping. For instance, such data quantity may be calculated in accordance with the recordable area of the optical disk grasped on the host side. And in addition thereto or separately therefrom, the slipping permissible data quantity may be calculated in accordance with the recording time and so forth set by the user.

Also the above preferred embodiment expresses an exemplary case of detecting the error in the recording mode indirectly by monitoring the tracking error signal and the focus error signal. However, the present invention is not limited only to such example, and various error detection methods may be widely adopted as well. For instance, the error in the recording mode may be detected indirectly through detection of disturbance by means of an acceleration sensor or the like, or the error in the recording mode may be detected directly by a technique of read-after-write.

Further the above preferred embodiment expresses an exemplary case of recording the video and audio data through compression thereof. However, the present invention is not limited thereto alone, and it may be applied widely to some other cases of recording high transfer rate data in real time.

Thus, a variety of other changes and modifications will be apparent to those skilled in the art without departing from the claims.

**Claims**

1. An optical disk apparatus (1) for sequentially recording desired data per unit of a predetermined data quantity in response to an input command, comprising:

    an input means (3) for inputting the command and the data;
    a recording means (12, 13, 14) for recording the data on an optical disk; and
    a control means (11) for controlling the operation of said input means and said recording means in response to the command and for executing a slipping process within a range of a data quantity permissible for slipping;

    **characterised in that** said data quantity is accepted by the control means and the range of the data quantity is the data quantity that can be buffered during the slipping process.

2. An optical disk apparatus according to claim 1, wherein said control means executes said slipping process on the basis of the result of monitoring a tracking error signal or a focus error signal.

3. A method for access to an optical disk (2) where desired data are recorded sequentially per unit of a predetermined data quantity in response to an issued command by an optical disk apparatus (1), said method comprising enabling said optical disk apparatus (1) to execute a slipping process within a range of a data quantity permissible for slipping, **characterised by** notifying said optical disk apparatus (1) of the data quantity permissible for slipping, the range of the data quantity being the data quantity that can be buffered during the slipping process, and enabling the apparatus to execute the slipping process only within said range.

**Patentansprüche**

1. Optische Plattenvorrichtung (1) zur sequentiellen Aufzeichnung von gewünschten Daten je Einheit einer bestimmten Datenmenge auf einen Eingabebefehl hin,
    mit einer Eingabeeinrichtung (3) zur Eingabe des Befehls und der Daten,
    mit einer Aufzeichnungseinrichtung (12, 13, 14) zur Aufzeichnung der Daten auf einer optischen Platte
    und mit einer Steuereinrichtung (11) zur Steuerung des Betriebs der betreffenden Eingabeeinrichtung und der genannten Aufzeichnungseinrichtung auf den Befehl hin und zur Ausführung eines Gleitprozesses innerhalb eines Bereiches einer ein Gleiten erlaubenden Datenmenge,
    **dadurch gekennzeichnet, dass** die genannte Datenmenge von der Steuereinrichtung entgegengenommen wird und dass der Bereich der Datenmenge die Datenmenge ist bzw. umfasst, die während des Gleitprozesses gepuffert werden kann.

**2.** Optische Plattenvorrichtung nach Anspruch 1, wobei die genannte Steuereinrichtung den betreffenden Gleitprozess auf der Grundlage des Ergebnisses einer Überwachung eines Spur- bzw. Nachlauffehlersignals oder eines Fokussierungsfehlersignals ausführt.

**3.** Verfahren zum Zugreifen auf eine optische Platte (2), auf der gewünschte Daten sequentiell je Einheit einer bestimmten Datenmenge auf einen abgegebenen Befehl hin durch eine optische Plattenvorrichtung (1) aufgezeichnet werden,
wobei das betreffende Verfahren der genannten optischen Plattenvorrichtung (1) ermöglicht, einen Gleitprozess innerhalb eines Bereiches einer ein Gleiten erlaubenden Datenmenge auszuführen,
**dadurch gekennzeichnet, dass** der betreffenden optischen Plattenvorrichtung (1) die ein Gleiten erlaubende Datenmenge, der Bereich der Datenmenge, welche die Datenmenge darstellt, die während des Gleitprozesses gepuffert werden kann, gemeldet wird und dass der Vorrichtung ermöglicht wird, den Gleitprozess lediglich innerhalb des genannten Bereiches auszuführen.

**Revendications**

**1.** Appareil à disque optique (1) pour enregistrer de façon séquentielle des données souhaitées par unité d'une quantité de données prédéterminée en réponse à une commande d'entrée, comprenant :

un moyen d'entrée (3) pour entrer la commande et les données ;
un moyen d'enregistrement (12, 13, 14) pour enregistrer les données sur un disque optique ; et
un moyen de commande (11) pour commander le fonctionnement dudit moyen d'entrée et dudit moyen d'enregistrement en réponse à la commande et pour exécuter un processus de glissement à l'intérieur d'une plage d'une quantité de données autorisée pour le glissement,

**caractérisé en ce que** ladite quantité de données est acceptée par le moyen de commanda et la plage de la quantité de données est la quantité de données qui peut être tamponnée pendant le processus de glissement.

**2.** Appareil à disque optique selon la revendication 1, dans lequel ledit moyen de commande exécute ledit processus de glissement sur la base du résultat de surveillance d'un signal d'erreur de suivi de piste ou d'un signal d'erreur de focalisation.

**3.** Procédé pour un accès à un disque optique (2) où des données souhaitées sont enregistrées de façon séquentielle par unité d'une quantité de données prédéterminée en réponse à une commande délivrée par un appareil à disque optique (1), ledit procédé comprenant la validation dudit appareil à disque optique (1) pour exécuter un processus de glissement à l'intérieur d'une plage d'une quantité de données autorisée pour le glissement, **caractérisé par** la notification audit appareil à disque optique (1) de la quantité de données autorisée pour le glissement, la plage de la quantité de données étant la quantité de données qui peut être tamponnée pendant le processus de glissement, et par la validation de l'appareil pour exécuter le processus de glissement seulement à l'intérieur de ladite plage.

# F I G. I

START ∽SP I

RECEIVE COMMAND
  TOP LOGICAL SECTOR No.N
  DATA LENGTH L
  NUMBER OF SLIPPABLE SECTORS B ∽SP2

START RECORDING
UPON ARRIVAL AT N ∽SP3

SP4
ANY
RECORDING
ERROR ?  —— YES —— Ⓐ

NO

Ⓑ

SP5
NO —— DATA
LENGTH L
AT END?

YES

COMPLETE COMMAND
(NORMAL TERMINATION) ∽SP6

Ⓒ

END ∽SP7

# FIG. 2

EP 1 035 544 B1

# FIG.3

DISK FORWARD
DIRECTION
(RECORDING ORDER)

LOGICAL
SECTOR NO.   N    N+1   N+2        N+L-1  N+L  N+L+1

|← ——————————— L ——————————— →|

RECORDING
START

RECORDING
END

# FIG.4

Ⓐ

READ NEXT
ADDRESS  —SP9

ADDRESS
CONSECUTIVE ?  —SP10 → NO

YES

SLIPPABLE
B OK?  —SP11 → NO

YES

SLIP AND
RECORD  —SP12

COMPLETE
COMMAND
(ERROR)  —SP13

Ⓑ

Ⓒ

DISK FORWARD DIRECTION
(RECORDING ORDER)

**F I G . 5 A**

LOGICAL
SECTOR NO.  N    N+1   N+2          N+L-1  N+L  N+L+1

RECORDING
START

RECORDING
ERROR DETECT

**F I G . 5 B**

LOGICAL
SECTOR NO. N    N+1   N+2          N+L-1  N+L  N+L+1

RECORDING
START

ADDRESS CHECK
RECORDING START

RECORDING
END

# F I G.6

DISK
OUTSIDE

| REGION N ALTERNATE AREA |
| REGION N DATA |

REGION 2
ALTERNATE
AREA

REGION
2 DATA

| REGION 2 ALTERNATE AREA |
| REGION 2 DATA |

| REGION 1 ALTERNATE AREA |
| REGION 1 DATA |
| LINK LIST |

DISK
INSIDE

| AD1 | →AD21 |
| AD2 | →AD22 |
| ADx | →AD2x |

DEFECTIVE
SECTOR
NO.

ALLOCATED
SECTOR
NO.

14